# EUROPÄISCHE PATENTSCHRIFT

(11) **EP 2 668 217 B1**
(45) Veröffentlichungstag und Bekanntmachung des Hinweises auf die Patenterteilung: **06.04.2016**
(21) Anmeldenummer: 12701458.7
(22) Anmeldetag: 04.01.2012
(51) Int. Cl.: C08G 12/42, C08L 61/32, C08L 67/00, C08K 5/00, H01B 1/00

(54) **DRAHTLACK-ZUSAMMENSETZUNG ENTHALTEND POLYOLE AUF MELAMIN-BASIS**
WIRE ENAMEL COMPOSITION CONTAINING MELAMINE-BASED POLYOLS
COMPOSITION DE VERNIS POUR FIL MÉTALLIQUE

(30) Priorität: 25.01.2011 DE 102011003129
(43) Veröffentlichungstag der Anmeldung: 04.12.2013
(73) Patentinhaber: Elantas GmbH, 46483 Wesel (DE)
(72) Erfinder: BHANU, Vinayak Anant, Konthrud Pune 411038 (IN); TAMBOLI, Hemant Rohidas, Maharashtra 411018 (IN); SULZBACH, Horst, 46348 Raesfeld (DE)
(74) Vertreter: Schuck, Alexander
(86) Internationale Anmeldenummer: PCT/EP2012/050072
(87) Internationale Veröffentlichungsnummer: WO 2012/100968

(56) Entgegenhaltungen:
- EP-A2- 0 352 776
- JP-A- 2003 068 140
- JP-A- 2010 254 762
- US-A- 3 297 785
- US-A- 4 347 335
- US-A- 4 391 947

## Beschreibung

Die vorliegende Erfindung betrifft neuartige Drahtlack-Zusammensetzungen enthaltend Polyester- oder Polyesterimidharze und Polyole auf Melamin-Basis sowie deren Verwendung. Außerdem betrifft die Erfindung die mit den neuartigen Drahtlacken beschichteten Kupferdrähte.

Die Herstellung von Transformatoren, Elektromotoren, Generatoren und elektrischen Messgeräten stellt immer höhere Anforderungen an lackisolierte Kupfer- und Aluminiumdrähte. Bei der Verarbeitung werden die Lackdrähte zunehmend stärker gedehnt, gequetscht und gewunden. Auch im laufenden Betrieb sind die Lackdrähte Vibrationen, Stauchungen und Temperaturbelastungen unterworfen. Der auf den Draht aufgetragene Drahtlack muss daher viele Anforderungen gleichzeitig erfüllen. Er sollte eine hohe chemische und thermische Beständigkeit, eine gute Haftung auf Drähten und eine besonders gute mechanische Festigkeit aufweisen. Beim Einsatz in umrichtergesteuerten elektrischen Motoren muss er unempfindlich gegenüber der auftretenden Teilentladung sein, um Kurzschlüsse zu verhindern. Zur Erfüllung der immer höheren Materialanforderungen bedarf es daher einer stetigen Verbesserung der Materialeigenschaften der eingesetzten Drahtlacke.

Die sich heutzutage auf dem Markt befindenden Drahtlacke sind im Wesentlichen Lösungen der gängigen Bindemittel in organischen Lösungsmitteln oder Lösungsmittelgemischen. Weit verbreitet sind Bindemittel wie Polyester-, Tris-2-hydroxyethylisocyanurat (THEIC)-modifizierte Polyesterharze, Polyesterimidharze, THEIC-modifizierte Polyesterimidharze und Polyurethanharze.

Polyesterimidharze und THEIC-modifizierte Polyesterimidharz-Lösungen als Drahtlacke sind beispielsweise aus DE 1 445 263, DE 1 495 100 sowie WO 91/07469 A1 bekannt. Neben Polyesterimidharzen oder THEIC-modifizierten Polyesterimidharzen und organischen Lösungsmitteln enthalten diese Drahtlacke häufig dieselben Vernetzungsmittel, Vernetzungskatalysatoren und weiteren Additive und Hilfsstoffe wie die Drahtlacke auf Polyester-Basis.

Als Vernetzungsmittel in derartigen Drahtlacken werden unter anderem Phenol-Formaldehydharze eingesetzt, wie sie beispielsweise in US 3,249,578 beschrieben sind. Die Nachteile der Phenol-Formaldehydharze sind ihr dunkler Farbton und ihre vergleichsweise schlechten thermischen Eigenschaften in Drahtlackformulierungen im Vergleich zu Polyester- oder Polyesterimidharzen.

Die Verwendung von Melamin, Melamin-Formaldehydharzen und verschiedenen Polyolen auf Melamin-Basis zur Herstellung von Harzen und Schäumen, insbesondere Polyurethanschäumen mit erhöhter Temperaturbeständigkeit ist seit vielen Jahren bekannt und beispielsweise in US 4,745,133 und US 2006/0069174 A1 beschrieben. Bekannt sind auch Polyole auf Melamin-Basis, die das Kondensationsprodukt der Reaktion von Melamin mit einem Aldehyd und einem Alkanolamin darstellen. Sie werden zur Herstellung von Polyurethanen mit verbesserten flammhemmenden Eigenschaften verwendet, wie beispielweise in US 4,939,182 beschrieben ist.

JP 2010 254762 A offenbart elektrisch isolierende Zusammensetzungen, umfassend ein Polyesterimidharz, das einen Isocyanuratring enthält, ein Melaminharz und ein Antioxidationsmittel, sowie diese elektrisch isolierende Zusammensetzungen enthaltende Drahtlacke. Es wird erwähnt, dass der Verwendung unterschiedlichster Melaminharze keine Grenzen gesetzt sind. Verwiesen wird in diesem Zusammenhang auf kommerziell erhältliche Melaminharze. An keiner Stelle werden Alkanolamine genannt.

JP 2003 068140 A offenbart eine elektrisch leitfähige Paste enthaltend ein elektrisch leitfähiges Material, ein aus Polyesterharz und Melaminharz bestehendes Bindemittelharz und ein Lösungsmittel sowie gegebenenfalls eine starke organische Säure als Katalysator und weitere Additive und Hilfsstoffe. Das eingesetzte Melaminharz ist durch Kondensationsreaktion von Melamin mit Formaldehyd und anschließender Zugabe eines Alkohols hergestellt worden. Als starke organische Säuren werden aromatische Sulfonsäuren und deren Ammoniumsalze genannt. Das Ammonium-Ion kann sich dabei u. a. von Diethanolamin ableiten.

US 4,391,947 A offenbart lösungsmittelfreie elektrisch isolierende Beschichtungszusammensetzungen auf Polyesterbasis sowie deren Verwendung als Tränkharz zur Isolierung von elektrischen Bauteilen. Diese Beschichtungszusammensetzung besteht im Wesentlichen aus einer Polyesterzusammensetzung und gegebenenfalls einer Melamin-Formaldehyd-Verbindung, wobei konkret Hexamethoxymethylmelamin genannt ist. Im Beispiel 2, in dem eine Melamin-Formaldehyd-Verbindung Bestandteil der Beschichtungszusammensetzung ist, wird Hexamethoxymethylmelamin eingesetzt. Alkanolamine werden im Zusammenhang mit Melamin-Formaldehyd-Verbindungen nicht genannt.

US 4,347,335 offenbart wasserverdünnbare Phenol-modifizierte Polyesterharz-Zusammensetzungen umfassend (I) ein Polyesterharz im Wesentlichen bestehend aus (a) einer organischen Dicarbonsäure, (b) einem Polyol mit mehr als zwei Hydroxyl-Gruppen wie (2-Hydroxyalkyl)isocyanurat, (c) einer Fettsäure, (d) einer Tricarbonsäure und (e) einem organischen Lösungsmittel, sowie (II) ein Additiv im Wesentlichen bestehend aus (a) einer wässrigen Lösung eines wasserlöslichen, unmodifizierten Phenol-Formaldehyd-Harzes, (b) einem wasserlöslichen Aminoplast wie einem Melamin-Formaldehyd-Kondensationsprodukt, (c) einer neutralisierenden Base und (d) einem organischen Lösungsmittel. Beispielhaft genannt werden die Melamin-Formaldehyd-Kondensationsprodukte Hexamethoxymethylmelamin, Hydroxymethoxymethylmelamin, Trimethoxymethylmelamin und Trimethylolmelamin. In Zusammenhang mit Melamin-Formaldehyd-Kondensationsprodukten werden Alkanolamine nicht genannt. Alkanolamine werden aber als geeignete neutralisierende Basen aufgerührt. Genannt ist 2-Amino-2-methyl-1-propanol. Dialkanolamine werden nicht erwähnt. Die Phenol-modifizierte Polyesterharz-Zusammensetzung kann als Beschichtungsmasse zur Isolierung verschiedener elektronischer Geräte verwendet werden. Die Beschichtung von Drähten, insbesondere von Kupferdrähten, ist nicht offenbart.

US 3,297,785 offenbart Melamin-Aldehyd-Harz-modifizierte Polyester, erhältlich durch Reaktion von einem polyfunktionellen Isocyanursäurederivat (I) mit einer oder mehrer Verbindungen ausgewählt aus Polycarbonsäuren und -estern davon, Glykolen und Polyolen (II) und einem Melamin-Formaldehyd-Harz (III) sowie deren Verwendung als Drahtlack. Als Melamin-Formaldehyd-Harze werden Alkanol-modifizierte Melamin-Formaldehyd-Harze aufgerührt. Alkanolamine als solche und Alkanolamin-modifizierte Melamin-Formaldehyd-Harze sind nicht offenbart.

EP 0 352 776 A2 offenbart die Herstellung des Polyols auf Melamin-Basis, die durch Kondensation von Melamin, Aldehyd und Alkanolamin erfolgt. Zudem werden verbesserte Eigenschaften, insbesondere verbesserte flammhemmende Eigenschaften von Polyurethanen bzw. Polyurethanpolyisocyanuraten oder Polyurethan- bzw. Polyurethanpolyisocyanurat-Schäumen beschrieben, die aus dem Polyol auf Melamin-Basis anstelle eines herkömmlichen Polyols und einem Polyisoscyanat hergestellt sind.

Aufgabe der vorliegenden Erfindung ist es, Polyester- und Polyesterimid-Drahtlacke bereitzustellen, die ein verbessertes Eigenschaftsprofil im Vergleich zu herkömmlich verwendeten Polyester- und Polyesterimid-Drahtlacken aufweisen. Diese Drahtlacke sollen lagerstabil und leicht zu verarbeiten sein, sowie einen hellen Farbton aufweisen. Außerdem sollen sie eine gute Haftung auf Kupferdrähten besitzen.

Die mit den Polyester- und Polyesterimid-Drahtlacken beschichteten Kupferdrähte sollen gegenüber den mit herkömmlichen Drahtlacken lackierten Kupferdrähten verbesserte thermische, elektrische und mechanische Eigenschaften aufweisen.

Gelöst wird die Aufgabe durch eine Drahtlack-Zusammensetzung enthaltend
(A): 0,1 bis 20 Gew.-% mindestens eines Polyols auf Melamin-Basis erhältlich durch Kondensation von
   (A1) Melamin,
   (A2) einem Aldehyd und
   (A3) einem Alkanolamin,
(B): 25 bis 60 Gew.-% mindestens eines Polyester- oder Polyesterimidharzes als Bindemittel,
(C): 20 bis 90 Gew.-% eines Lösungsmittels oder Lösungsmittelgemisches,
(D): 0 bis 5 Gew.-% eines Katalysator, sowie
(E): 0 bis 2 Gew.-% eines oder mehrerer üblicher Additive und Hilfsstoffe,
wobei die Summe der Komponenten (A) bis (E) 100 Gew.-% ergibt.

Es ist überraschend, dass das Ersetzen des in herkömmlichen Polyester- und Polyesterimid-Drahtlacken als Vernetzungsmittel eingesetzten Phenol-Formaldehydharzes durch ein Polyol auf Melamin-Basis zu Drahtlacken führt, die lagerstabil und leicht zu verarbeiten sind, sowie sehr gut auf Kupferdrähten haften. Überraschend ist auch, dass die mit dem erfindungsgemäßen Drahtlack lackierten Kupferdrähte verbesserte thermische, elektrische und mechanische Eigenschaften aufweisen im Vergleich zu den mit herkömmlichem Drahtlack lackierten Kupferdrähten.

Im Folgenden werden die Komponenten (A) bis (E) des erfindungsgemäßen Drahtlacks näher erläutert.

Das zur Herstellung des erfindungsgemäßen Drahtlacks eingesetzte Polyol auf Melamin-Basis (A) ist bekannt und beschrieben in US 2006/0069174. Die Herstellung des Polyols auf Melamin-Basis erfolgt auf bekannte Weise durch Kondensationsreaktion von Melamin mit einem Aldehyd und einem Alkanolamin bei 20 °C bis 150 °C, bevorzugt bei 40 °C bis 120°C, besonders bevorzugt bei 50 °C bis 90 °C. Je nachdem, welches Aldehyd und welches Alkanolamin eingesetzt werden, entsteht nach dem Abkühlen eine viskose Lösung oder ein glasartig erstarrter Feststoff, der entweder gemahlen oder in einem Lösungsmittel gelöst werden kann. Die Herstellung des Polyols auf Melamin-Basis kann auch in einem Lösungsmittel erfolgen.

Für die Herstellung des Polyols auf Melamin-Basis üblicherweise eingesetzte Aldehyde sind beispielsweise aliphatische Aldehyde wie Acetaldehyd, Propionaldehyd, Butyraldehyd, Isovaleraldehyd und Amylaldehyd, alicyclische Aldehyde wie Cyclopentylcarbaldehyd und Cyclohexylcarbaldehyd, aromatische Aldehyde wie Benzaldehyd und 4-tert-Butylbenzaldehyd, sowie Formaldehyd. Bevorzugt eingesetzte Aldehyde sind Acetaldehyd, Propionaldehyd, Butyraldehyd, Isovaleraldehyd, Amylaldehyd und Formaldehyd. Besonders bevorzugt eingesetzter Aldehyd ist Formaldehyd. Außerdem können auch Gemische der genannten Aldehyde eingesetzt werden.

Formaldehyd kann dabei in jeder erhältlichen Form eingesetzt werden, beispielweise in Form von Paraformaldehyd, Trioxan oder in Form einer Formalin-Lösung (37 gew.-%ige Lösung in Wasser).

Für die Herstellung des Polyols auf Melamin-Basis üblicherweise eingesetzte Alkanolamine sind beispielsweise Monoalkanolamine wie Methylethanolamin, Ethylethanolamin, Methylisopropanolamin, Ethylisopropanolamin, Phenylethanolamin, Ethanolamin und Isopropanolamin, Dialkanolamine wie Diethanolamin, Diisopropylamin, Ethanolisopropanolamin, Ethanol-2-hydroxybutylamin und Isopropanol-2-hydroxyhexylamin. Bevorzugt eingesetzte Alkanolamine sind Dialkanolamine wie Diethanolamin, Diisopropanolamin, Ethanolisopropanolamin, Ethanol-2-hydroxybutylamin und Isopropanol-2-hydroxyhexylamin. Besonders bevorzugt eingesetztes Dialkanolamin ist Diethanolamin. Außerdem können auch Gemische dieser Alkanolamine eingesetzt werden.

Das bei der Herstellung der Komponenete (A) üblicherweise verwendete Molverhältnis Melamin:Aldehyd:Alkanolamin beträgt 1: 2,0 bis 4,0: 2,0 bis 4,0. Bevorzugt beträgt dieses Molverhältnis 1:2,5 bis 3,5: 2,5 bis 3,5. Besonders bevorzugt beträgt dieses Molverhältnis 1:3:3.

Die Polyole auf Melamin-Basis werden in der erfindungsgemäßen Drahtlack-Zusammensetzung üblicherweise in Mengen von 0,1 bis 20 Gew.-%, bevorzugt von 0,1 bis 10 Gew.-%, besonders bevorzugt von 0,1 bis 5 Gew.%, bezogen auf die Summe der Komponeneten (A) bis (E), eingesetzt.

Das zur Herstellung der erfindungsgemäßen Drahtlack-Zusammensetzung eingesetzte Bindemittel (B) ist ein Polyesterharz oder Polyesterimidharz.

Die eingesetzten Polyesterharze sind bekannt und beispielsweise beschrieben in US 3,342,780 und in EP 0 144 281 B. Die Herstellung der Polyesterharze erfolgt in bekannter Weise durch Veresterung von Polycarbonsäuren mit Polyolen in Gegenwart geeigneter Veresterungskatalysatoren. Gegebenenfalls erfolgt die Veresterung in Gegenwart von Kettenabbrechern.

Für die Herstellung der Polyesterharze geeignete Polycarbonsäuren sind aliphatische oder aromatische Polycarbonsäuren, deren Anhydride, Carbonsäurehalogenide und Alkylester, sowie deren Gemische. Geeignete Dicarbonsäuren sind beispielsweise Oxalsäure, Malonsäure, Bernsteinsäure, Glutarsäure, Adipinsäure, Phthalsäure, Isophthalsäure, Terephthalsäure, Trimesinsäure, Naphthalindicarbonsäuren, deren Anhydride, soweit sie existieren, deren Carbonsäurehalogenide, sowie deren niedere Alkylester wie Methyl-, Ethyl-, Propyl-, Butyl-, Amyl-, Hexyl- und Octylester. Geeignet sind sowohl die Monoalkylester, die Dialkylester als auch deren Gemische. Geeignete Tricarbonsäuren sind beispielsweise Zitronensäure und Trimellitsäure, deren Anhydride, Carbonsäurechloride und Alkylester. Geeignete Tetracarbonsäuren sind beispielweise Pyromellitsäure und Naphthalintetracarbonsäure, deren Anhydride, Carbonsäurechloride und Alkylester. Bevorzugte Polycarbonsäuren sind aromatische Dicarbonsäuren wie Phthalsäure, Isophthalsäure und Terephthalsäure, deren Anhydride, soweit sie existieren, deren Carbonsäurehalogenide, sowie deren niedere Alkylester wie Methyl-, Ethyl-, Propyl-Butyl-, Amyl-, Hexyl- und Octylester. Besonders bevorzugt sind Dialkylterephthalate wie Dimethylterephthalat, Diethylterephthalat und Dipropylterephthalat.

Für die Herstellung der Polyesterharze geeignete Polyole sind aliphatische oder aromatische Polyole, sowie deren Gemische. Geeignete Diole sind beispielsweise Ethylenglykol, 1,2- und 1,3-Propandiol, 1,2-, 1,3- und 1,4-Butandiol, 1,5-pentandiol, Neopentylglykol, Diethylenglykol und Triethylenglykol. Geeignete Triole sind beispielsweise Glycerin, Trimethylolethan, Trimethylolpropan und THEIC. Bevorzugte Polyole sind Ethylenglykol, Glycerin und THEIC, sowie deren Gemische.

Für die Herstellung der Polyesterharze geeignete Veresterungskatalysatoren sind beispielsweise Metallsalze wie Bleiacetat, Zinkacetat, organische Titanate wie Tetramethyltitanat, Tetraethyltitanat, Tetrapropyltitanat, Tetrabutyltitanat, Tetraamyltitanat, Tetrahexyltitanat, oder organische Säuren wie p-Toluolsulfonsäure. Bevorzugt sind organische Titanate wie Tetramethyltitanat, Tetraethyltitanat, Tetrapropyltitanat, Tetrabutyltitanat, Tetraamyltitanat, Tetrahexyltitanat. Besonders bevorzugt ist Tetrabutyltitanat.

Die bei der Herstellung des erfindungsgemäßen Drahtlacks eingesetzten Polyesterimidharze sind ebenfalls bekannt und beispielsweise beschrieben in DE 1 445 263 A und DE 1 495 100 A. Die Herstellung der Polyesterimidharze erfolgt in bekannter Weise durch Veresterung von Polycarbonsäuren mit Polyolen in Gegenwart von imidgruppenhaltigen Verbindungen, Veresterungskatalysatoren und gegebenenfalls Hydroxycarbonsäuren. Anstelle der imidgruppenhaltigen Verbindungen können auch Verbindungen eingesetzt werden, aus denen während der Veresterung imidgruppenhaltige Verbindungen hervorgehen.

Für die Herstellung der Polyesterimidharze eignen sich prinzipiell dieselben Polycarbonsäuren, Polyole und Veresterungskatalysatoren, die sich auch für die Herstellung der oben beschriebenen Polyesterharze eignen. Bevorzugte Polycarbonsäuren sind aromatische Dicarbonsäuren, deren Anhydride, soweit sie existieren, deren Carbonsäurehalogenide, sowie deren niedere Alkylester. Besonders bevorzugt sind Dialkylterephthalate wie Dimethylterephthalat, Diethylterephthalat und Dipropylterephthalat. Bevorzugte Polyole sind Ethylenglykol, Glycerin und THEIC sowie deren Gemische. Besonders bevorzugt sind Ethylenglykol und THEIC sowie deren Gemische.

Die imidgruppenhaltigen Verbindungen können beispielsweise durch Reaktion von cyclischen Carbonsäureanhydriden, die mindestens eine weitere funktionelle Gruppe besitzen, mit primären Aminen, die mindestens eine weitere funktionelle Gruppe besitzen, vor der Veresterungsreaktion hergestellt werden.

Geeignete cyclische Carbonsäureanhydride mit mindestens einer weiteren funktionellen Gruppe sind beispielsweise Pyromellitsäuredianhydrid, Trimellitsäureanhydrid und Naphthalintetracarbonsäuredianhydrid. Bevorzugt ist Trimellitsäureanhydrid.

Geeignete primäre Amine mit mindestens einer weiteren funktionellen Gruppe sind beispielsweise diprimäre Diamine wie Ethylendiamin, Tetramethylendiamin, Hexamethylendiamin, Nonamethylendiamin, Benzidin, Diaminodiphenylmethan, Diaminodiphenylketon, -sulfon, -sulfoxyd, -ether und -thioether, Phenylendiamin, Toluylendiamin, Xylylendiamin, Aminoalkohole wie Monoethanolamin und Monopropanolamine, sowie Aminocarbonsäuren wie Glycin, Aminopropionsäure, Aminocapronsäure und Aminobenzoesäure. Bevorzugt sind diprimäre Diamine wie Ethylendiamin, Tetramethylendiamin, Hexamethylendiamin, Nonamethylendiamin, Benzidin und Diaminodiphenylmethan. Besonders bevorzugt ist Diaminodiphenylmethan.

Beispielsweise können imidgruppenhaltige Verbindungen durch Reaktion von 2 mol Trimellitsäureanhydrid mit 1 mol der genannten primären Diamine mit mindestens einer weiteren funktionellen Gruppe erhalten werden.

Anstelle der imidgruppenhaltigen Verbindungen, deren Herstellung vor der Veresterungsreaktion erfolgt, können bei der Herstellung der Polyesterimidharze auch die aufgeführten cyclischen Carbonsäureanhydride mit mindestens einer weiteren funktionellen Gruppe und primären Amine mit mindestens einer weiteren funktionellen Gruppe direkt in der Veresterungsreaktion eingesetzt werden. In einer Ausführungsform werden die cyclischen Carbonsäureanhydride mit mindestens einer weiteren funktionellen Gruppe und die primären Amine mit mindestens einer weiteren funktionellen Gruppe direkt in der Veresterungsreaktion eingesetzt.

Die Polyesterharze und Polyesterimidharze werden in der erfindungsgemäßen Drahtlack-Zusammensetzung üblicherweise in Mengen von 25 bis 60 Gew.-%, bevorzugt von 30 bis 55 Gew.-%, besonders bevorzugt von 35 bis 45 Gew.%, bezogen auf die Summe der Komponeneten (A) bis (E), eingesetzt.

Als Lösungsmittel (C) werden in dem erfindungsgemäßen Drahtlack die üblichen Drahtlacklösungsmittel und deren Gemische verwendet. Diesen werden als Verschnittmittel üblicherweise aromatische Kohlenwasserstoffe sowie Gemische aromatischer Kohlenwasserstoffe zugesetzt. Geeignete Drahtlacklösungsmittel sind beispielsweise aromatische Alkohole wie Phenol, Kresol und Xylenol, Glykolether wie Butylglykol, Methyldiglykol, Ethyldiglykol, Butyldiglykol und Phenylglykol, Ester wie Benzoesäuremethylester, Bernsteinsäuredimethylester, Glutarsäuredimethylester, Adipinsäuredimethylester, Amide wie Dimethylformamid und *N*,*N*-Dimethylacetamid, cyclische Ketone wie Cyclöhexanon und Isophoron, cyclische Carbonate wie Propylencarbonat, Lactone wie γ-Butyrolacton und Lactame wie *N*-Methylpyrrolidon. Geeignete Verschnittmittel sind beispielsweise aromatische Kohlenwasserstoffe wie Xylol, Toluol, Ethylbenzol und Cumol, sowie Gemische aromatischer Kohlenwasserstoffe wie Solvent-Naphtha und Schwerbenzol. Bevorzugt verwendet werden Gemische von aromatischen Alkoholen wie Phenol, Kresol und Xylenol mit aromatischen Kohlenwasserstoffen wie Xylol, Toluol, Ethylbenzol und Cumol oder Gemischen aromatischer Kohlenwasserstoffe wie Solvent-Naphtha und Schwerbenzol, ggf. mit Lactamen wie *N*-Methylpyrrolidon. Besonders bevorzugt ist ein Gemisch aus Kresol und ggf. Solvent-Naphtha und *N*-Methylpyrrolidon.

Die Lösungsmittel werden in der erfindungsgemäßen Drahtlack-Zusammensetzung üblicherweise in Mengen von 20 bis 90 Gew.-%, bevorzugt von 30 bis 75 Gew.-%, besonders bevorzugt von 55 bis 65 Gew.%, bezogen auf die Summe der Komponenten (A) bis (E), eingesetzt.

Für die Herstellung des erfindungsgemäßen Drahtlacks geeignete Katalysatoren (D) sind beispielsweise Metallsalze wie Bleiacetat, Zinkacetat, organische Titanate wie Tetramethyltitanat, Tetraethyltitanat, Tetrapropyltitanat, Tetrabutyltitanat, Tetraamyltitanat, Tetrahexyltitanat, oder organische Säuren wie p-Toluolsulfonsäure. Bevorzugt sind organische Titanate wie Tetramethyltitanat, Tetraethyltitanat, Tetrapropyltitanat, Tetrabutyltitanat, Tetraamyltitanat und Tetrahexyltitanat. Besonders bevorzugt ist Tetrabutyltitanat.

Der Katalysator wird in der erfindungsgemäßen Drahtlack-Zusammensetzung üblicherweise in Mengen von 0 bis 5 Gew.-%, bevorzugt von 0,2 bis 4 Gew.-%, besonders bevorzugt von 0,5 bis 3 Gew.%, bezogen auf die Summe der Komponenten (A) bis (E), eingesetzt.

Der erfindungsgemäße Drahtlack kann eines oder mehrere übliche Additive und Hilfsstoffe (E) enthalten. Als Additive und Hilfsstoffe für Drahtlacke können beispielsweise übliche Verlaufsmittel auf Basis von Polyacrylaten und Polysiloxanen verwendet werden.

Die Additive und Hilfsstoffe werden bei der erfindungsgemäßen Drahtlack-Zusammensetzung üblicherweise in Mengen von 0 bis 2 Gew.-%, bevorzugt von 0 bis 1,0 Gew.-%, besonders bevorzugt von 0 Gew.% bis 0,5 Gew. %, bezogen auf die Summe der Komponenten (A) bis (E), eingesetzt.

Die Drahtlacke werden nach den üblichen Verfahren hergestellt.

Die erfindungsgemäßen Drahtlack-Zusammensetzungen können zur Beschichtung von Kupfer und Alumniumdrähten verwendet werden. Insbesondere können sie zur Beschichtung von Kupferdrähten verwendet werden.

Die erfindungsgemäßen Drahtlacke werden durch übliche Drahtlackiermaschinen auf den Kupferdraht aufgebracht und ausgehärtet. Dabei wird die jeweils erforderliche Lackfilmstärke durch mindestens 1 bis zu 15 Einzelaufträgen aufgebaut, wobei jeder einzelne Lackauftrag vor dem erneuten Lackauftrag blasenfrei ausgehärtet wird. Übliche Drahtlackiermaschinen arbeiten mit Abzugsgeschwindigkeiten von 5 bis zu 180 m/min, je nach Dicke des zu beschichtenden Drahtes. Typische Ofentemperaturen liegen zwischen 300 °C und 700°C. Die lackierten Drähte werden nach IEC 60851 geprüft.

Es ist überraschend, dass die erfindungsgemäßen Drahtlack-Zusammensetzungen eine gute Lagerstabilität und eine gute Haftung auf Kupferdrähten aufweisen. Es ist außerdem überraschend, dass die mit dem erfindungsgemäßen Drahtlack lackierten Kupferdrähte im Vergleich zu den mit herkömmlichem Drahtlack lackierten Kupferdrähten verbesserte thermische, elektrische und mechanische Eigenschaften aufweisen.

Die Erfindung wird durch die nachstehenden Beispiele näher erläutert.

### Beispiele

### Vergleichsbeispiel 1

### Herstellung eines Kresol-Formaldehydharzes

Die Herstellung des Kresol-Formaldehydharzes erfolgt nach US 4 206 098, Beispiel 2, Teil IV.

Ein 3-Liter-Kolben wird zur Herstellung eines Kresol-Formaldehydharzes mit den folgenden Stoffen beschickt:
1376,0 g meta/para-Kresolgemisch
605,0 g Formalin (40 gew.-%ige Formaldehydlösung in Wasser)
23,4 g Triethanolamin

Die Reaktionsmischung wird unter ständigem Rühren 1,5 h lang unter Rückfluss erhitzt und dann auf 55 °C abgekühlt. In einem Scheidetrichter wird die organische Phase von der wässrigen Phase abgetrennt und wieder in einen Kolben gefüllt. Die organische Phase wird mit 21,7 g Salicylsäure versetzt und bei einem Druck von 26 mm Hg auf 40 °C bis 80 °C erwärmt, bis eine Viskosität von 36 Poise erreicht ist. Dann werden 1695 g Kresol zugesetzt, wodurch eine Lösung erhalten wird, deren Gehalt an schwerflüchtigen Bestandteilen 30 Gew.-% beträgt: Diese Lösung wird im Folgenden als POL-KRE bezeichnet.

### Beispiel 1

### Herstellung eines Polyols auf Melamin-Basis

Die Herstellung des Polyols auf Melamin-Basis erfolgt nach US 4 939 182, Beispiel 1.

In einem geeigneten Reaktionsgefäß werden 126,0 g (1,0 mol) Melamin und 243,2 g (3,0 mol) Formalin (37 gew.-%ige Formaldehyd-Lösung in Wasser) vorgelegt. Die Reaktionsmischung wird unter ständigem Rühren auf 70 °C erhitzt und 1 h lang auf 70 °C gehalten, wobei sich eine klare Reaktionsmischung bildet, was auf eine vollständige Umsetzung hindeutet. Der pH-Wert der Reaktionslösung beträgt zu diesem Zeitpunkt pH 8. Die Reaktionsmischung wird unter ständigem Rühren mit 315,0 g (3,0 mol) Diethanolamin versetzt, auf 75 °C erwärmt und 1 h lang bei dieser Temperatur gehalten. Dann wird unter vermindertem Druck bei ungefähr 75 °C so lange Wasser entfernt, bis der Wassergehalt des Kondensationsprodukts noch ungefähr 2 Gew.-% beträgt. Das anfallende Kondensationsprodukt besitzt eine Viskosität von ungefähr 300 bis 500 mPas bei 23 °C und einen Anteil an Hydroxylgruppen von ungefähr 15 Gew.-% (entspricht ungefähr einer Hydroxylzahl von 900 bis 1100 mg KOH/g).

Das anfallende Kondensationsprodukt wird mit *N*-Methylpyrrolidon verdünnt, bis der Feststoffgehalt 30 Gew.-% beträgt, und dann auf Raumtemperatur abgekühlt. Diese Lösung wird im Folgenden als POL-MEL bezeichnet.

### Vergleichsbeispiel 2

### Herstellung eines herkömmlichen Polyester-Drahtlacks

Ein geeignetes Reaktionsgefäß wird mit 64,74 g Ethylenglykol, 40,00 g Kresol, 271, 80 g Dimethylterephthalat, 67,43 g Glycerin und 0,30 g Tetrabutyltitanat beschickt. Die Reaktionsmischung wird zur Herstellung eines Polyesterharzes mit einer Hydroxylzahl von ungefähr 180 bis 280 mg KOH/g auf 220 °C erhitzt. Das anfallende Polyesterharz wird bei einer Temperatur zwischen 150 °C und 180 °C mit 41,57 g Kresol und 262,50 g Xylenol verdünnt und auf Raumtemperatur abgekühlt. Bei Raumtemperatur werden 236,66 g Solvent Naphtha, 10,00 g Tetrabutyltitanat und 5,00 g POL-KRE zugesetzt.

Viskosität des Polyester-Drahtlacks (gemessen mit dem 4-mm-DIN-Auslaufbecher nach DIN 53211 bei 23 °C): 105 s; Feststoffgehalt des Polyester-Drahtlacks (1 g, 1 h, 180°C): 35,00 Gew.-%.

### Beispiel 2

### Herstellung eines erfindungsgemäßen Polyester-Drahtlacks mit einem Polyol auf Melamin-Basis als Vernetzungsmittel

Die Herstellung des Polyester-Drahtlacks erfolgt nach der in Vergleichsbeispiel 2 beschriebenen Vorschrift mit dem Unterschied, dass 5,00 g POL-MEL anstelle von POL-KRE zugesetzt werden.

Viskosität des Polyester-Drahtlacks (gemessen mit dem 4-mm-DIN-Auslaufbecher nach DIN 53211 bei 23 °C): 110 s; Feststoffgehalt des Polyester-Drahtlacks (1 g, 1 h, 180 °C): 34,60 Gew.-%.

Die in Vergleichsbeispiel 2 und Beispiel 2 hergestellten Polyester-Drahtlacke werden zur Lackierung eines Kupferdrahts mit einem Durchmesser von 1,0 mm/AWG 18 auf einer standardmäßigen Drahtlackiermaschine unter folgenden Lackierbedingungen verwendet:

| | |
|---|---|
| Ofen: | MAG VE6 |
| Temperatur: | 450 °C |
| Auftragssystem: | Düsen |
| Zahl der Durchzüge: | 8 |
| Abzugsgeschwindigkeit: | 21 m/min |
| Durchmesser-Zunahme: | 65 bis 75 µm |

Die lackierten Drähte wurden nach IEC 60851 geprüft. Die Ergebnisse sind in Tabelle 1 zusammengefasst.

**Tabelle 1: Lackierergebnisse der Polyester-Drahtlacke auf 1,0 mm Kupferdraht**

| | Vergleichsbeispiel 2 | Beispiel 2 |
|---|---|---|
| Oberfläche | sehr gut | sehr gut |
| Haftung beim Wickeln, 1 x d + Vordehnung | 15 % | 25% |
| Durchschlagsspannung bei Raumtemperatur | 7,2 kV | 9,0 kV |
| Wärmeschock, Vordehnung 30 min | 180 °C, 6 x d | 180 °C, 4 x d |
| Wärmedruck, 2 min | 280 °C | 320 °C |
| tan δ-Steilanstieg | 90 °C | 103 °C |

Wie Tabelle 1 zeigt, besitzt der erfindungsgemäße Polyester-Drahtlack aus Beispiel 2 eine bessere Haftung auf 1,0 mm Kupferdraht im Vergleich zu herkömmlichem Polyester-Drahtlack aus Vergleichsbeispiel 2 bei gleichbleibend guter Oberflächenqualität. Darüber hinaus zeigt der mit dem erfindungsgemäßen Drahtlack aus Beispiel 2 lackierte Draht hinsichtlich Wärmeschock und Wärmedruck eine signifikante Steigerung gegenüber dem mit herkömmlichem Drahtlack aus Vergleichsbeispiel 2 lackierten Draht. Außerdem liegt der tan δ-Steilanstieg mit 103 °C ebenfalls höher als beim Vergleichsbeispiel 2.

### Vergleichsbeispiel 3

### Herstellung eines herkömmlichen THEIC-Polyester-Drahtlacks

Die Herstellung des THEIC-Polyester-Drahtlacks erfolgt nach US 5 854 334, Beispiel 4.

In einem geeigneten Reaktionsapparat werden 55,24 g Ethylenglykol, 30,08 g Kresol, 206,20 g Dimethylterephthalat, 122,03 g THEIC und 0,32 g Tetrabutyltitanat auf 200 °C erhitzt, um ein THEIC-Polyesterharz mit einer Hydroxylzahl zwischen 140 und 260 mg KOH/g herzustellen. Das THEIC-Polyesterharz wird bei einer Temperatur zwischen 150 °C und 180 °C mit 306,07 g Kresol und 111,26 g Xylenol verdünnt und anschließend auf Raumtemperatur abgekühlt. Bei Raumtemperatur werden 107,03 g Solvent Naphtha, 20,00 g Tetrabutyltitanat und 41,77 g POL-KRE zugesetzt.

Viskosität des THEIC-Polyester-Drahtlacks bei 23 °C: 530 mPa.s; Feststoffgehalt des THEIC-Polyester-Drahtlacks (1 g, 1 h, 180 °C): 39,00 Gew.-%.

### Beispiel 3:

### Herstellung eines erfindungsgemäßen THEIC-Polyester-Drahtlacks mit einem Polyol auf Melamin-Basis als Vernetzungsmittel

Die Herstellung des THEIC-Polyester-Drahtlacks erfolgt nach der in Vergleichsbeispiel 3 beschriebenen Vorschrift mit dem Unterschied, dass 41,77 g POL-MEL anstelle von POL-KRE zugesetzt werden.

Viskosität des THEIC-Polyester-Drahtlacks bei 23 °C: 660 mPa.s; Feststoffgehalt des THEIC-Polyester-Drahtlacks (1 g, 1 h, 180 °C): 38,10 Gew.-%.

Die in Vergleichsbeispiel 3 und Beispiel 3 hergestellten THEIC-Polyester-Drahtlacke werden zur Lackierung eines Kupferdrahts mit einem Durchmesser von 1,0 mm/AWG 18 auf einer standardmäßigen Drahtlackiermaschine unter folgenden Lackierbedingungen verwendet:

| | |
|---|---|
| Ofen: | MAG VE6 |
| Temperatur: | 450 °C |
| Auftragssystem: | Düsen |
| Zahl der Durchzüge: | 8 |
| Abzugsgeschwindigkeit: | 19 m/min |
| Durchmesser-Zunahme: | 65 bis 75 µm |

Die lackierten Drähte wurden nach IEC 60851 geprüft. Die Ergebnisse sind in Tabelle 2 zusammengefasst.

**Tabelle 2: Lackierergebnisse der THEIC-Polyester-Drahtlacke auf 1,0 mm Kupferdraht**

| | Vergleichsbeispiel 3 | Beispiel 3 |
|---|---|---|
| Oberfläche | sehr gut | sehr gut |
| Haftung beim Wickeln, 1 x d + Vordehnung | 10% | 25 % |
| Durchschlagsspannung bei Raumtemperatur | 7,0 kV | 8,2 kV |
| Wärmeschock, 2,24 mm D + Vordehnung 30 min | 155 °C | 170 °C |
| Wärmedruck, 2 min | 350 °C | 380 °C |
| tan δ-Steilanstieg | 135 °C | 142 °C |

Wie Tabelle 2 zeigt, zeichnet sich der erfindungsgemäße THEIC-Polyester-Drahtlack aus Beispiel 3 durch eine deutlich bessere Haftung auf 1,0 mm Kupferdraht im Vergleich zu herkömmlichem THEIC-Polyester-Drahtlack aus Vergleichsbeispiel 3 aus. Der mit dem erfindungsgemäßen Drahtlack aus Beispiel 3 lackierte Draht zeigt darüberhinaus einen signifikanten Anstieg des Wärmeschocks und des Wärmedrucks gegenüber dem mit herkömmlichem Drahtlack aus Vergleichsbeispiel 3 lackierten Draht. Auch der tan δ-Steilanstieg liegt mit 142 °C höher als beim Vergleichsbeispiel 3.

### Vergleichsbeispiel 4

### Herstellung eines herkömmlichen THEIC-Polyesterimid-Drahtlacks

Die Herstellung des THEIC-Polyesterimid-Drahtlacks erfolgt nach US 5 854 334, Beispiel 15.

In einem Eintopfverfahren werden 72,9 g Ethylenglykol, 194,2 g THEIC, 166,60 g Dimethylterephthalat, 220,10 g Trimellitsäureanhydrid, 112,0 g 4,4'-Diaminodiphenylmethan und 0,7 g Tetrabutyltitanat auf 200 °C erhitzt, um ein Polyesterimidharz herzustellen. Dabei werden 95,10 g eines Destillats erhalten. Das Polyesterimidharz wird bei 200 °C mit 808,50 g Kresol verdünnt und anschließend auf Raumtemperatur abgekühlt. Die abgekühlte Lösung wird mit 288,50 g Solvent Naphtha, 11,4 g Tetrabutyltitanat und 29,70 g POL-KRE versetzt.

Viskosität des THEIC-Polyesterimid-Drahtlacks bei 23 °C: 810 mPa.s; Feststoffgehalt des THEIC-Polyesterimid-Drahtlacks (1 g, 1 h, 180 °C): 39,80 Gew.-%.

### Beispiel 4

### Herstellung eines erfindungsgemäßen THEIC-Polyesterimid-Drahtlacks mit einem Polyol auf Melamin-Basis als Vernetzungsmittel

Die Herstellung des THEIC-Polyesterimid-Drahtlacks erfolgt nach der in Vergleichsbeispiel 4 beschriebenen Vorschrift mit dem Unterschied, dass 29,70 g POL-MEL anstelle von POL-KRE zugesetzt werden.

Viskosität des THEIC-Polyesterimid-Drahtlacks bei 23 °C: 786 mPa.s; Feststoffgehalt des THEIC-Polyesterimid-Drahtlacks (1 g, 1 h, 180 °C): 39,10 Gew.-%.

Die in Vergleichsbeispiel 4 und Beispiel 4 hergestellten THEIC-Polyesterimid-Drahtlacke werden zur Lackierung eines Kupferdrahts mit einem Durchmesser von 1,0 mm/AWG 18 auf einer standardmäßigen Drahtlackiermaschine unter folgenden Lackierbedingungen verwendet:

| | |
|---|---|
| Ofen: | MAG VE6 |
| Temperatur: | 450 °C |
| Auftragssystem: | Düsen |
| Zahl der Durchzüge: | 8 |

| | |
|---|---|
| Abzugsgeschwindigkeit: | 17 m/min |
| Durchmesser-Zunahme: | 65 bis 75 µm |

Die lackierten Drähte wurden nach IEC 60851 geprüft. Die Ergebnisse sind in Tabelle 3 zusammengefasst.

**Tabelle 3: Lackierergebnisse der THEIC-Polyesterimid-Drahtlacke auf 1,0 mm Kupferdraht**

| | Vergleichsbeispiel 4 | Beispiel 4 |
|---|---|---|
| Oberfläche | sehr gut | sehr gut |
| Haftung beim Wickeln, 1 x d + Vordehnung | 15 % | 15 % |
| Durchschlagsspannung bei Raumtemperatur | 8,7 kV | 10,0 kV |
| Wärmeschock, 2,24 mm D + Vordehnung 30 min | 220 °C | 220 °C |
| Wärmedruck, 2 min | 350 °C | 370 °C |
| tan δ-Steilanstieg | 175 °C | 187 °C |

Wie Tabelle 3 zeigt, zeichnet sich der mit erfindungsgemäßem THEIC-Polyesterimid-Drahtlack aus Beispiel 4 lackierte Draht gegenüber dem mit herkömmlichem THEIC-Polyesterimid-Drahtlack aus Vergleichsbeispiel 4 lackierten Draht durch eine höhere Durchschlagsspannung bei Raumtemperatur aus. Der mit dem erfindungsgemäßen. Drahtlack aus Beispiel 4 lackierte Draht zeigt darüberhinaus erhöhte Werte bei Wärmedruck und tan δ-Steilanstieg.

Die erfindungsgemäßen Drahtlacke mit einem Polyol auf Melamin-Basis als Vernetzungsmittel zeichnen sich gegenüber den herkömmlichen Drahtlacken mit einem Phenol-Formaldehydharz als Vernetzungsmittel durch eine verbesserte Haftung auf 1,0 mm Kupferdraht aus. Außerdem zeigen die mit den erfindungsgemäßen Drahtlacken lackierten Drähte gegenüber den mit herkömmlichen Drahtlacken lackierten Drähten signifikante Anstiege des Wärmedrucks und des tan δ-Steilanstiegs.

## Patentansprüche

1. Drahtlack-Zusammensetzung enthaltend
(A): 0,1 bis 20 Gew.-% mindestens eines Polyols auf Melamin-Basis erhältlich durch Kondensation von
(A1) Melamin,
(A2) einem Aldehyd und
(A3) einem Alkanolamin,
(B): 25 bis 60 Gew.-% mindestens eines Polyester- oder Polyesterimidharzes,
(C): 20 bis 90 Gew.-% eines Lösungsmittels oder Lösungsmittelgemisches,
(D): 0 bis 5 Gew.-% eines Katalysator, sowie
(E): 0 bis 2 Gew.-% eines oder mehrerer üblicher Additive und Hilfsstoffe,
wobei die Summe der Komponenten (A) bis (E) 100 Gew.-% ergibt.

2. Drahtlack-Zusammensetzung gemäß Anspruch 1, **dadurch gekennzeichnet, dass** das Alkanolamin ein Dialkanolamin ist.

3. Drahtlack-Zusammensetzung gemäß Anspruch 2, **dadurch gekennzeichnet, dass** das Dialkanolamin Diethanolamin ist.

4. Drahtlack-Zusammensetzung gemäß einem der Ansprüche 1 bis 3, **dadurch gekennzeichnet, dass** das Aldehyd Formaldehyd ist.

5. Drahtlack-Zusammensetzung gemäß einem der Ansprüche 1 bis 4, **dadurch gekennzeichnet, dass** die Komponente (B) ein Polyesterharz enthält.

6. Drahtlack-Zusammensetzung gemäß einem der Ansprüche 1 bis 4, **dadurch gekennzeichnet, dass** die Komponente (B) ein Tris-2-hydroxylethylisocyanurat (THEIC)-modifiziertes Polyesterharz enthält.

7. Drahtlack-Zusammensetzung gemäß einem der Ansprüche 1 bis 4, **dadurch gekennzeichnet, dass** die Komponente (B) ein Tris-2-hydroxylethylisocyanurat (THEIC)-modifiziertes Polyesterimidharz enthält.

8. Verwendung der Drahtlack-Zusammensetzung gemäß einem der Ansprüche 1 bis 7 zur Beschichtung von elektrischen und elektronischen Bauteilen und Geräten.

9. Verwendung gemäß Anspruch 8 zur Beschichtung von Kupferdrähten.

10. Verwendung eines Polyols auf Melamin-Basis, erhältlich durch Kondensation von
(A1) Melamin,
(A2) einem Aldehyd und
(A3) einem Alkanolamin,
zur Herstellung von Drahtlacken auf Basis von Polyester- oder Polyesterimidharzen.

11. Verwendung gemäß Anspruch 10, **dadurch gekennzeichnet, dass** das Alkanolamin ein Dialkanolamin ist.

12. Verwendung gemäß Anspruch 11, **dadurch gekennzeichnet, dass** das Dialkanolamin Diethanolamin ist.

## Claims

1. Wire enamel composition comprising
(A): 0.1% to 20% by weight of at least one melamine-based polyol obtainable by condensation of
(A1) melamine,
(A2) an aldehyde and
(A3) an alkanolamine,
(B): 25% to 60% by weight of at least one polyester resin or polyesterimide resin,
(C): 20% to 90% by weight of a solvent or a solvent mixture,
(D): 0% to 5% by weight of a catalyst, and also
(E): 0% to 2% by weight of one or more customary additives and auxiliaries,
the sum of components (A) to (E) being 100% by weight.

2. Wire enamel composition according to Claim 1, **characterized in that** the alkanolamine is a dialkanolamine.

3. Wire enamel composition according to Claim 2, **characterized in that** the dialkanolamine is diethanolamine.

4. Wire enamel composition according to any of Claims 1 to 3, **characterized in that** the aldehyde is formaldehyde.

5. Wire enamel composition according to any of Claims 1 to 4, **characterized in that** component (B) comprises a polyester resin.

6. Wire enamel composition according to any of Claims 1 to 4, **characterized in that** component (B) comprises a tris-2-hydroxyethylisocyanurate (THEIC)-modified polyester resin.

7. Wire enamel composition according to any of Claims 1 to 4, **characterized in that** component (B) comprises a hydroxyethylisocyanurate (THEIC)-modified polyesterimide resin.

8. Use of the wire enamel composition according to any of Claims 1 to 7 for coating electrical and electronic components and devices.

9. Use according to Claim 8 for coating copper wires.

10. Use of a melamine-based polyol obtainable by condensation of
(A1) melamine,
(A2) an aldehyde and
(A3) an alkanolamine,
for preparing wire enamels based on polyester resins or polyesterimide resins.

11. Use according to Claim 10, **characterized in that** the alkanolamine is a dialkanolamine.

12. Use according to Claim 11, **characterized in that** the dialkanolamine is diethanolamine.

## Revendications

1. Composition d'émail pour fil métallique, contenant :
(A) : 0,1 à 20 % en poids d'au moins un polyol à base de mélamine pouvant être obtenu par condensation de
(A1) de la mélamine,
(A2) un aldéhyde et
(A3) une alcanolamine,
(B) : 25 à 60 % en poids d'au moins une résine de polyester ou de polyester-imide,
(C) : 20 à 90 % en poids d'un solvant ou d'un mélange de solvants,
(D) : 0 à 5 % en poids d'un catalyseur, et
(E) : 0 à 2 % en poids d'un ou de plusieurs additifs et adjuvants usuels,
la somme des composants (A) à (E) étant de 100 % en poids.

2. Composition d'émail pour fil métallique selon la revendication 1, **caractérisée en ce que** l'alcanolamine est une dialcanolamine.

3. Composition d'émail pour fil métallique selon la revendication 2, **caractérisée en ce que** la dialcanolamine est la diéthanolamine.

4. Composition d'émail pour fil métallique selon l'une quelconque des revendications 1 à 3, **caractérisée en ce que** l'aldéhyde est le formaldéhyde.

5. Composition d'émail pour fil métallique selon l'une quelconque des revendications 1 à 4, **caractérisée en ce que** le composant (B) contient une résine de polyester.

6. Composition d'émail pour fil métallique selon l'une quelconque des revendications 1 à 4, **caractérisée en ce que** le composant (B) contient une résine de polyester modifiée par de l'isocyanurate de tris-2-hydroxyléthyle (THEIC).

7. Composition d'émail pour fil métallique selon l'une quelconque des revendications 1 à 4, **caractérisée en ce que** le composant (B) contient une résine de polyester-imide modifiée par de l'isocyanurate de tris-2-hydroxyléthyle (THEIC).

8. Utilisation de la composition d'émail pour fil métallique selon l'une quelconque des revendications 1 à 7 pour le revêtement de composants et d'appareils électriques et électroniques.

9. Utilisation selon la revendication 8 pour le revêtement de fils en cuivre.

10. Utilisation d'un polyol à base de mélamine, pouvant être obtenu par condensation de
(A1) de la mélamine,
(A2) un aldéhyde et
(A3) une alcanolamine,
pour la fabrication d'émaux pour fil métallique à base de résines de polyester ou de polyester-imide.

11. Utilisation selon la revendication 10, **caractérisée en ce que** l'alcanolamine est une dialcanolamine.

12. Utilisation selon la revendication 11, **caractérisée en ce que** la dialcanolamine est la diéthanolamine.
